# EUROPÄISCHE PATENTSCHRIFT

(11) **EP 2 369 561 B1**
(45) Veröffentlichungstag und Bekanntmachung des Hinweises auf die Patenterteilung: **08.05.2019**
(21) Anmeldenummer: 11157333.3
(22) Anmeldetag: 08.03.2011
(51) Int. Cl.: G08B 13/08, E05B 45/00, H01H 13/18, G08B 25/10

(54) **Überwachungseinrichtung zur Überwachung einer Schließstellung eines gegen einen Rahmen schwenkbaren Flügels**
Monitoring device for monitoring a closed position of a leaf which can be pivoted against a frame
Dispositif de surveillance destiné à la surveillance d'une position de fermeture d'un battant pivotant contre un cadre

(30) Priorität: 23.03.2010 DE 102010003163
(43) Veröffentlichungstag der Anmeldung: 28.09.2011
(73) Patentinhaber: Aug. Winkhaus GmbH & Co. KG, 48291 Telgte (DE)
(72) Erfinder: Homann, Frank, 48565, Steinfurt (DE); Hövel, Walter, 48369, Saerbeck (DE); Oeltjebruns, Henning, 48161, Münster (DE)

(56) Entgegenhaltungen:
- DE-U1- 20 308 042
- DE-U1-202006 016 872
- US-A- 3 280 279
- US-A- 3 641 540
- US-A- 3 797 006
- US-A- 4 941 424
- US-A- 5 022 340

## Beschreibung

Die Erfindung betrifft eine Überwachungseinrichtung zur Überwachung einer Schließstellung eines gegen einen Rahmen schwenkbaren Flügels aufweisenden Fensters, einer Fenstertür oder dergleichen mit einem einen Spannungsgenerator aufweisenden Sensorelement zur Erzeugung eines Funksignals, mit einem bei einer Bewegung des Flügels gegen den Rahmen auslenkbaren Taster und mit einer Betätigungseinrichtung zur Übertragung der Bewegung des Tasters auf das Sensorelement.

Mit solchen Überwachungseinrichtungen lässt sich eine aufwändige Versorgung des Sensorelements mit elektrischem Strom vermeiden, weil der Spannungsgenerator bei der Übertragung der Bewegung des Schaltelementes gegenüber dem Sensorelement elektrische Energie erzeugt. Diese elektrische Energie wird für die Spannungsversorgung des Sensorelements und zur Erzeugung des Funksignals genutzt.

Die DE 20 2006 016 872 U1 offenbart eine Vorrichtung zur Anzeige des Öffnungszustandes eines Fensters oder einer Fenstertür, bei dem ein Sensor an einem Rahmen befestigt ist und mit einem Schieber in den Bewegungsbereich eines Flügels hineinragt. In Abhängigkeit von den drei Zuständen "offen", "gekippt" und "geschlossen" des Flügels wird von einem Potentiometer ein veränderbares elektrisches Signal erzeugt.

Eine Überwachungseinrichtung der eingangs genannten Art mit einem Funkschalter ist beispielsweise aus der DE 20 2008 016 823 U1 bekannt. Bei dieser Überwachungseinrichtung ist der Taster längsverschieblich in dem Rahmen geführt und steht im geöffneten Zustand des Fensters einem Flügelüberschlag gegenüber. Bei der Bewegung des Flügels gegen den Rahmen drückt der Flügelüberschlag den Taster nieder. Die Betätigungseinrichtung hat einen an dem Taster befestigten Schaft, welcher mit einem Schaltelement des Sensorelements in Verbindung steht. Beim Niederdrücken wird der Schaft verschoben und das Schaltelement des Sensorelements betätigt. Nachteilig bei der bekannten Überwachungseinrichtung ist jedoch, dass bei Toleranzen zwischen Flügel und Rahmen ein sicheres Erfassen der Schließstellung des Flügels nicht möglich ist und dass das Schaltelement beim Niederdrücken des Tasters beschädigt werden kann.

Aus der DE 101 61 761 A1 ist eine Fensterzugangskontrolle bekannt geworden, bei der ein von einem Federelement vorgespannter Metallstift verschieblich im Rahmen geführt ist. Der Metallstift ist in den Bewegungsbereich des Flügels vorgespannt und wird beim Schließen des Flügels niedergedrückt und gegen einen Drucksensor gedrückt. Auch bei dieser Fensterzugangskontrolle ist bei Toleranzen zwischen Flügel und Rahmen eine sichere Erfassung der Schließstellung des Flügels nicht gewährleistet.

Die DE 203 08 042 U1 offenbart einen Schließzustandsmelder für Türen oder Fenster, bei dem ein verschiebbares Betätigungsteil aus einem Gehäuse herausragt. Das Betätigungsteil weist einen Magneten auf und ist von dem Gehäuse weg vorgespannt. Das Gehäuse hat einen Reedkontakt. Beim Schließen des Fensters wird das Betätigungsteil mit dem Magneten gegen das Gehäuse gedrückt, so dass der Reedkontakt ein Signal liefert.

Der Erfindung liegt das Problem zugrunde, eine Überwachungseinrichtung der eingangs genannten Art so weiter zu bilden, dass sie auch bei Toleranzen zwischen Rahmen und Flügel eine zuverlässige Erfassung der Schließstellung des Flügels ermöglicht und dass das Sensorelement zuverlässig vor Beschädigung geschützt ist.

Dieses Problem wird erfindungsgemäß gelöst durch eine eine Überwachungseinrichtung gemäß Anspruch 1.

Durch diese Gestaltung führt das elastische Element nach der Betätigung des Sensorelements zu einer Entkoppelung der Bewegungen des Tasters von dem Sensorelement, da das elastische Element eine geringere Festigkeit hat als die Festigkeit des Sensorelements. Der Taster kann daher derart montiert werden, dass eine Bewegung des Flügels gegen den Rahmen frühzeitig von dem Sensorelement erfasst wird. Bei der Weiterbewegung des Flügels wird das elastische Element verformt und der Flügel kann in dem Rahmen verriegelt werden. Weiterhin werden in Richtung des Sensorelementes wirkende Stöße von dem elastischen Element gedämpft. Die erfindungsgemäße Überwachungseinrichtung gewährleistet daher einen besonders zuverlässigen Schutz des Sensorelements vor Beschädigung.

Die Betätigungseinrichtung gestaltet sich gemäß der Erfindung konstruktiv besonders einfach, wenn der Stößel ein inneres Stößelelement und ein äußeres Stößelelement hat, wenn die zwei Stößelelemente teleskopartig ineinander schiebbar sind und wenn das elastische Element die beiden Stößelelemente voneinander weg vorspannt. Im einfachsten Fall ist das elastische Element eine Wendelfeder.

Die Betätigungseinrichtung hat gemäß einer anderen vorteilhaften Weiterbildung der Erfindung eine hohe Stabilität, wenn der Taster mit dem inneren Stößelelement verbunden und das äußeres Stößelelement zur Aufnahme zumindest eines Teilbereichs des inneren Stößelelementes topfförmig gestaltet ist.

Die Betätigungseinrichtung gestaltet sich gemäß einer anderen vorteilhaften Weiterbildung der Erfindung besonders kompakt, wenn eine Ausnehmung zur Aufnahme eines Schaltpins des Sensorelementes an dem äußeren Stößelelement angeordnet ist.

Der Taster könnte beispielsweise beim Schließen des Flügels gerade niedergedrückt werden. Dies erfordert jedoch, dass das elastische Element die Toleranzen vollständig ausgleicht. Der Taster vermag gemäß einer anderen vorteilhaften Weiterbildung der Erfindung die Schließbewegung des Flügels zu erfassen, wenn der Taster am Flügel oder an dem Rahmen montiert ist und mit einer Steuerkante des jeweils gegenüber liegenden Bauteils des Rahmens oder des Flügels zusammenwirkt und wenn die Bewegungsrichtung des Tasters quer zur Bewegungsrichtung der Steuerkante beim Schließen des Flügels angeordnet ist. Durch diese Gestaltung lässt sich vermeiden, dass Bauteile der erfindungsgemäßen Überwachungseinrichtung in Richtung Flügelüberschlag über dem Rahmen hervorstehen.

Ein dauerhaftes Verformen des elastischen Elementes in Schließstellung des Fensters lässt sich gemäß einer anderen vorteilhaften Weiterbildung der Erfindung einfach vermeiden, wenn der Taster eine erste, der Schließrichtung des Flügels zugewandte Rampe und eine zweite, der Schließrichtung des Flügels abgewandte Rampe hat, wenn die beiden Rampen zu einer gemeinsamen Erhebung führen und wenn die Steuerkante im geschlossenen Flügel über der zweiten Rampe steht. Durch diese Gestaltung wird der Taster beim Schließen niedergedrückt, wenn die Steuerkante über die erste Rampe gleitet. Dabei kann das elastische Element verformt werden, wenn die Steuerkante über der Erhebung steht. Im vollständig im Rahmen liegenden Zustand des Flügels ist das elastische Element jedoch entspannt, weil sich die Steuerkante von der Erhebung entfernt hat und über der zweiten Rampe steht. Weiterhin können hierdurch bei einem Schließvorgang zwei Funksignale erzeugt werden.

Der Taster gestaltet sich gemäß einer anderen vorteilhaften Weiterbildung der Erfindung konstruktiv besonders einfach, wenn der Taster kegelstumpfförmig oder kegelförmig gestaltet ist. Durch diese Gestaltung ist die Erhebung im Zentrum des Tasters angeordnet. Eine drehsichere Montage des Tasters ist wegen seiner Symmetrie nicht erforderlich.

Die erfindungsgemäße Überwachungseinrichtung lässt sich einfach auf die Toleranzen des Fensters einstellen, wenn der kegelstumpfförmige oder kegelförmige Taster über ein Gewinde gegenüber dem Stößel höhenverstellbar ist. Weiterhin kann hierdurch die Überwachungseinrichtung auf unterschiedliche Falzhöhen angepasst werden.

Zur weiteren Erhöhung der Stabilität der Betätigungseinrichtung trägt es gemäß der Erfindung bei, wenn ein Gehäuse ein Federelement zur Vorspannung des Stößels abstützt und einen Anschlag hat zur Abstützung des Stößels bei geöffnetem Fenster.

Die wesentlichen Bauteile der erfindungsgemäßen Überwachungseinrichtung lassen sich einfach im vormontierten Zustand an dem Fenster befestigen, wenn eine Führung für den Stößel und das Sensorelement in dem Gehäuse angeordnet sind.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: ein Fenster mit einer erfindungsgemäßen Überwachungseinrichtung,
- Fig. 2: vergrößert eine Schnittdarstellung durch das Fenster mit der Überwachungseinrichtung in Schließstellung,
- Fig. 3: das Fenster mit der Überwachungseinrichtung in Schließstellung,
- Fig. 4: eine Schnittdarstellung durch einen Teilbereich der Überwachungseinrichtung in einer vergrößerten Darstellung.

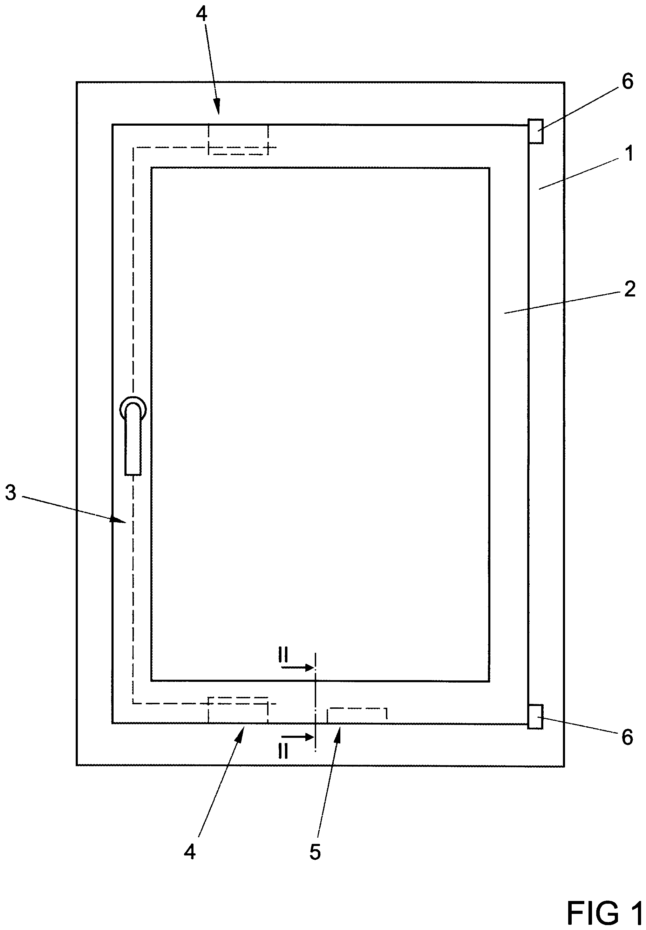

Figur 1 zeigt ein Fenster mit einem gegen einen Rahmen 1 schwenkbaren Flügel 2 und mit einem Treibstangenbeschlag 3. In der dargestellten Stellung liegt der Flügel 2 in dem Rahmen 1. Das Fenster befindet sich damit in Schließstellung. Der Treibstangenbeschlag 3 hat mehrere Verschlüsse 4 zur Verriegelung des Flügels 2 in dem Rahmen 1. Das Fenster weist zudem eine Überwachungseinrichtung 5 auf, welche ein Funksignal erzeugt, wenn der Flügel 2 gegen den Rahmen 1 geschwenkt wird. Das Fenster hat beispielhaft zwei Lager 6 zur Verschwenkung des Flügels 2 gegenüber dem Rahmen 1.

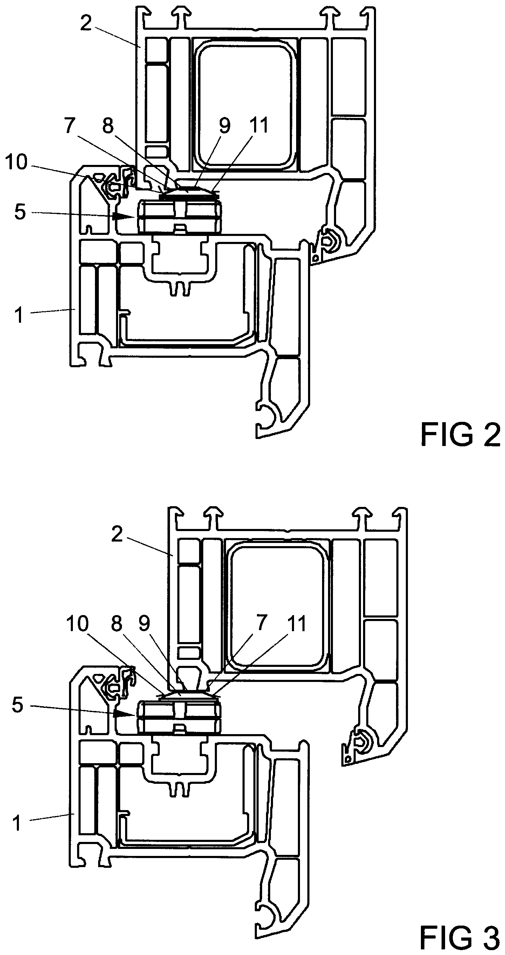

Figur 2 zeigt vergrößert eine Schnittdarstellung durch einen Teilbereich des Fensters aus Figur 1 vor der Überwachungseinrichtung 5. Die Überwachungseinrichtung 5 hat einen von einer Steuerkante 7 des Flügels 2 auslenkbaren Taster 8. Der Taster 8 hat eine mittige Erhebung 9 und eine erste, der Schließrichtung des Flügels 2 zugewandte Rampe 10 und eine zweite, der Schließrichtung des Flügels abgewandte Rampe 11.

Bei der Bewegung des Flügels 2 gegen den Rahmen 1 gleitet die Steuerkante 7 zunächst über die erste Rampe 10 bis zu der Erhebung 9 und drückt den Taster 8 dabei nieder. Dieser niedergedrückte Zustand des Tasters 8 ist in Figur 3 dargestellt. Bei einer Weiterbewegung des Flügels 2 in die in Figur 2 dargestellte Schließstellung gelangt die Steuerkante 7 über die zweite Rampe 11. Der Taster 8 kann sich dabei geringfügig nach oben bewegen.

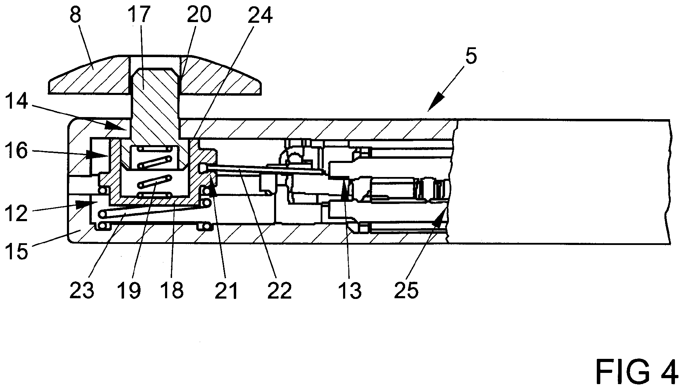

Figur 4 zeigt eine Schnittdarstellung durch einen Teilbereich der Überwachungseinrichtung 5. Die Überwachungseinrichtung 5 hat eine Betätigungseinrichtung 12 zur Übertragung der Bewegung des Tasters 8 auf ein Sensorelement 13. Das Sensorelement 13 und eine Führung 14 für den Taster 8 sind in einem Gehäuse 15 angeordnet. Die Betätigungseinrichtung 12 hat einen Stößel 16 zur Halterung des Tasters 8. Der Stößel 16 hat ein inneres Stößelelement 17 und ein äußeres Stößelelement 18. Die Stößelelemente 17, 18 sind teleskopartig ineinander schiebbar. Im Stößel 16 ist ein elastisches Element 19 angeordnet, welches die Stößelelemente 17, 18 voneinander weg vorspannt. Der Taster 8 ist über ein Gewinde 20 auf das innere Stößelelement 17 aufgeschraubt und lässt sich gegenüber diesem in seiner Höhe verstellen. Weiterhin ist der Taster 8 kegelstumpfförmig gestaltet. Das äußere Stößelelement 18 hat eine Ausnehmung 21 zur Aufnahme eines Schaltpins 22 des Sensorelementes 13 und wird von einem Federelement 23 gegen einen Anschlag 24 im Gehäuse 15 vorgespannt. Weiterhin ist das äußere Stößelelement 18 topfförmig gestaltet und nimmt einen Teilbereich des inneren Stößelelementes 17 und das elastische Element 19 auf. Das Sensorelement 13 hat zudem einen Spannungsgenerator 25 zur Erzeugung von elektrischem Strom bei einer Auslenkung des Schaltpins 22.

## Patentansprüche

1. Überwachungseinrichtung (5) zur Überwachung einer Schließstellung eines gegen einen Rahmen (1) schwenkbaren Flügels (2) aufweisenden Fensters, einer Fenstertür oder dergleichen mit einem einen Spannungsgenerator (25) aufweisenden Sensorelement (13) zur Erzeugung eines Funksignals, mit einem bei einer Bewegung des Flügels (2) gegen den Rahmen (1) auslenkbaren Taster (8) und mit einer Betätigungseinrichtung (12) zur Übertragung der Bewegung des Tasters (8) auf das Sensorelement (13), wobei die Betätigungseinrichtung in einem Gehäuse (15) angeordnet ist, wobei die Betätigungseinrichtung (12) einen zwischen dem Taster (8) und dem Sensorelement (13) angeordneten Stößel (16) mit einem elastischen Element (19) hat und dass das elastische Element (19) eine zur Betätigung des Sensorelements (13) ausreichende Festigkeit hat und bei einer Weiterbewegung des Tasters (8) über eine Schaltschwelle des Sensorelements (13) hinaus nachgiebig gestaltet ist, **dadurch gekennzeichnet, dass** der Stößel (16) ein inneres Stößelelement (17) und ein äußeres Stößelelement (18) hat, die teleskopartig ineinander schiebbar sind, dass das elastische Element (19) die beiden Stößelelemente (17,18) voneinander weg vorspannt; dass der Taster (8) in Verbindung mit dem inneren Stößelelement (17) steht; dass ein Federelement (23) in Verbindung mit dem äußeren Stößelelement (18) steht und das äußere Stößelelement gegen einen Anschlag (24) im Gehäuse (15) vorspannt; und, dass das äußere Stößelelement (18) eine Ausnehmung (21) zur Aufnahme eines Schaltpins (22) des Sensorelements (13) aufweist, wobei bei einer Auslenkung des Schaltpins (22) durch Bewegung des äußeren Stößelelements (18) das Sensorelement (13) einen elektrischen Strom mittels des Spannungsgenerators (25) erzeugt.

2. Überwachungseinrichtung nach Anspruch 2, **dadurch gekennzeichnet, dass** der Taster (8) mit dem inneren Stößelelement (17) verbunden und das äußeres Stößelelement (18) zur Aufnahme zumindest eines Teilbereichs des inneren Stößelelementes (17) topfförmig gestaltet ist.

3. Überwachungseinrichtung nach einem der vorhergehenden Ansprüche, **dadurch gekennzeichnet, dass** der Taster (8) am Flügel (2) oder dem Rahmen (1) montiert ist und mit einer Steuerkante (7) des jeweils gegenüber liegenden Bauteil des Rahmens (1) oder des Flügels (2) zusammenwirkt und dass die Bewegungsrichtung des Tasters (8) quer zur Bewegungsrichtung der Steuerkante (7) beim Schließen des Flügels (2) angeordnet ist.

4. Überwachungseinrichtung nach Anspruch 5, **dadurch gekennzeichnet, dass** der Taster (8) eine erste, der Schließrichtung des Flügels (2) zugewandte Rampe (10) und eine zweite, der Schließrichtung des Flügels (2) abgewandte Rampe (11) hat, dass die beiden Rampen (10, 11) zu einer gemeinsamen Erhebung (9) führen und dass die Steuerkante (7) im geschlossenen Flügel (2) über der zweiten Rampe (11) steht.

5. Überwachungseinrichtung nach einem der vorhergehenden Ansprüche, **dadurch gekennzeichnet, dass** der Taster (8) kegelstumpfförmig oder kegelförmig gestaltet ist.

6. Überwachungseinrichtung nach Anspruch 7, **dadurch gekennzeichnet, dass** der kegelstumpfförmige oder kegelförmige Taster (8) über ein Gewinde (20) gegenüber dem Stößel (16) höhenverstellbar ist.

7. Überwachungseinrichtung nach einem der vorhergehenden Ansprüche, **dadurch gekennzeichnet, dass** das Gehäuse (15) das Federelement (23) zur Vorspannung des Stößels (16) abstützt und einen Anschlag (24) hat zur Abstützung des Stößels (16) bei geöffnetem Fenster.

8. Überwachungseinrichtung nach Anspruch 9, **dadurch gekennzeichnet, dass** eine Führung (14) für das innere Stößelelement (17) und das Sensorelement (13) in dem Gehäuse (15) angeordnet sind.

## Claims

1. A monitoring device (5) for monitoring a closed position of a window, a French door or the like having a casement (2) pivotable against a frame (1) with a sensor element (13) having a voltage generator (25) for generating a radio signal, having a feeler (8) deflectable against the frame (1) during a movement of the casement (2) and having an actuating device (12) for transmitting the movement of the feeler (8) to the sensor element (13), wherein the actuating device is arranged in a housing (15), wherein the actuating device (12) has a tappet (16) with an elastic element (19) arranged between the feeler (8) and the sensor element (13) and that the elastic element (19) has strength sufficient for actuating the sensor element (13) and during a further movement of the feeler (8) is designed to be flexible beyond a switching threshold of the sensor element (13), **characterized in that** the tappet (16) has an inner tappet element (17) and an outer tappet element (18), which are slidable telescopically into one another, that the elastic element (19) pretensions the two tappet elements (17, 18) away from one another; that the feeler (8) is connected with the inner tappet element (17); that the spring element (23) is connected with the outer tappet element (18) and pretensions the outer tappet element against a stop (24) in the housing (15); and, that the outer tappet element (18) has a recess (21) for receiving a switch pin (22) of the sensor element (13), wherein during a deflection of the switch pin (22) through movement of the outer tappet element (18) the sensor element (13) generates an electric current by means of the voltage generator (25).

2. A monitoring device according to Claim 2, **characterized in that** the feeler (8) is connected to the inner tappet element (17) and the outer tappet element (18) is designed cup-shaped for receiving at least one sub-region of the inner tappet element (17).

3. A monitoring device according to any one of the preceding claims, **characterized in that** the feeler (8) is mounted on the casement (2) or on the frame (1) and interacts with a control edge (7) of the respectively opposite component of the frame (1) or of the casement (2) and that the direction of movement of the feeler (8) is arranged transversely to the direction of movement of the control edge (7) when closing the casement (2).

4. A monitoring device according to Claim 5, **characterized in that** the feeler (8) has a first ramp (10) facing the closing direction of the casement (2) and a second ramp (11) facing away from the closing direction of the casement (2), that the two ramps (10, 11) lead to a joint elevation (9) and that the control edge (7) in the closed casement (2) is above the second ramp (11).

5. A monitoring device according to any one of the preceding claims, **characterized in that** the feeler (8) is designed truncated-cone-shaped or cone-shaped.

6. A monitoring device according to Claim 7, **characterized in that** the truncated-cone-shaped or cone-shaped feeler (8) can be height adjustable via a thread (20) relative to the tappet (16).

7. A monitoring device according to any one of the preceding claims, **characterized in that** the housing (15) supports the spring element (23) for pretensioning the tappet (16) and has a stop (24) for supporting the tappet (16) when the window is open.

8. A monitoring device according to Claim 9, **characterized in that** a guide (14) for the inner tappet element (17) and the sensor element (13) are arranged in the housing (15).

## Revendications

1. Dispositif de surveillance (5) pour la surveillance d'une position de fermeture d'une fenêtre, porte-fenêtre ou autre, comprenant un battant (2) pivotant par rapport à un châssis (1), avec un élément de capteur (13) comprenant un générateur de tension (25), pour la production d'un signal radio, avec un bouton (8) pouvant être dévié lors d'un mouvement du battant (2) par rapport au châssis (1) et avec un dispositif d'actionnement (12) pour la transmission du mouvement du bouton (8) vers l'élément de capteur (13), le dispositif d'actionnement étant disposé dans un boîtier (15), le dispositif d'actionnement (12) comprenant un poussoir (16) disposé entre le bouton (8) et l'élément de capteur (13), avec un élément élastique (19) et l'élément élastique (19) présentant une solidité suffisante pour l'actionnement de l'élément de capteur (13) et étant conçu de manière flexible au-delà d'un seuil de commutation de l'élément de capteur (13) lors d'un mouvement du bouton (8), **caractérisé en ce que** le poussoir (16) comprend un élément de poussoir interne (17) et un élément de poussoir externe (18), qui coulissent l'un dans l'autre de manière télescopique, **en ce que** l'élément élastique (19) précontraint les deux éléments de poussoir (17, 18) en les éloignant l'un de l'autre ; **en ce que** le bouton (8) est relié avec l'élément de poussoir interne (17) ; **en ce qu'**un élément à ressort (23) est relié avec l'élément de poussoir externe (18) et précontraint l'élément de poussoir externe contre une butée (24) dans le boîtier (15) ; et **en ce que** l'élément de poussoir externe (18) comprend un évidement (21) pour le logement d'une broche de commutation (22) de l'élément de capteur (13), moyennant quoi, lors d'une déviation de la broche de commutation (22) du fait du mouvement de l'élément de poussoir externe (18), l'élément de capteur (13) génère un courant électrique au moyen du générateur de tension (25).

2. Système de surveillance selon la revendication 2, **caractérisé en ce que** le bouton (8) est relié avec l'élément de poussoir interne (17) et l'élément de poussoir externe (18) est conçu sous la forme d'une cloche pour le logement d'au moins une partie de l'élément de poussoir interne (17).

3. Système de surveillance selon l'une des revendications précédentes, **caractérisé en ce que** le bouton (8) est monté sur le battant (2) ou sur le châssis (1) et interagit avec une arête de commande (7) du composant opposé du châssis (1) ou du battant (2) et **en ce que** la direction de déplacement du bouton (8) est disposée transversalement par rapport à la direction de déplacement de l'arête de commande (7) lors de la fermeture du battant (2).

4. Système de surveillance selon la revendication 5, **caractérisé en ce que** le bouton (8) comprend une première rampe (10) orientée dans la direction de fermeture du battant (2) et une deuxième rampe (11) opposée à la direction de fermeture du battant (2), **en ce que** les deux rampes (10, 11) conduisent à un bossage commun (9) et **en ce que** l'arête de commande (7) est disposée, dans le battant (2) fermé, au-dessus de la deuxième rampe (11).

5. Système de surveillance selon l'une des revendications précédentes, **caractérisé en ce que** le bouton (8) est conçu sous une forme tronconique ou conique.

6. Système de surveillance selon la revendication 7, **caractérisé en ce que** le bouton tronconique ou conique (8) peut être réglé en hauteur par rapport au poussoir (16) à l'aide d'un filetage (20).

7. Système de surveillance selon l'une des revendications précédentes, **caractérisé en ce que** le boîtier (15) soutient l'élément à ressort (23) pour la précontrainte du poussoir (16) et comprend une butée (24) pour le soutien du poussoir (16) lorsque la fenêtre est ouverte.

8. Système de surveillance selon la revendication 9, **caractérisé en ce qu'un** guidage (14) pour l'élément de poussoir interne (17) et l'élément de capteur (13) sont disposés dans le boîtier (15).
